# FASCICULE DE BREVET EUROPEEN

(11) **EP 0 511 922 B1**
(45) Date de publication et mention de la délivrance du brevet: **19.06.1996**
(21) Numéro de dépôt: 92440042.7
(22) Date de dépôt: 08.04.1992
(51) Int. Cl.: A01D 34/66

(54) **Machine de coupe perfectionnée avec structure d'attelage pivotante**
Mähmaschine mit schwenkbarer Kupplungsstruktur
Mowing machine with pivoting hitch structure

(30) Priorité: 30.04.1991 FR 9105560
(43) Date de publication de la demande: 04.11.1992
(73) Titulaire: KUHN S.A., F-67700 Saverne (FR)
(72) Inventeur: Wolff, Michel, F-67670 Waltenheim s/Zorn (FR); Neuerburg, Horst, F-67700 Saverne (FR)

(56) Documents cités:
- EP-A- 0 337 909
- EP-A- 0 356 358
- EP-A- 0 422 721
- WO-A-88/03749
- DE-A- 2 723 060
- FR-A- 2 437 767
- GB-A- 1 119 644
- GB-A- 2 157 936
- NL-A- 6 918 351
- NL-A- 7 115 956

## Description

La présente invention concerne une machine de coupe comportant :
- un mécanisme de coupe s'étendant, durant le travail, transversalement à la direction d'avance,
- une structure d'attelage munie de trois points d'attelage destinés à être liés aux trois points d'attelage du dispositif de relevage d'un véhicule moteur,
- une poutre-support articulée d'une part à la structure d'attelage au moyen d'un premier tourillon d'axe dirigé vers l'avant et s'étendant, vu suivant la direction d'avance au travail, au moins sensiblement dans le voisinage du triangle formé par les trois points d'attelage de la structure d'attelage, et d'autre part au mécanisme de coupe, à l'aide d'un deuxième tourillon d'axe dirigé vers l'avant,
- un organe de dépose destiné à maintenir la poutre-support dans une position de dépose de sorte que la structure d'attelage puisse être pivotée autour de l'axe dudit premier tourillon,
et
- un organe de traction comportant un ressort destiné, durant le travail, à délester le mécanisme de coupe et dont l'action peut être annulée en vue de la dépose.

Dans le document FR-A-2 437 767, il est connu une machine de coupe de ce type réalisée sous forme de faucheuse. Celle-ci comporte un mécanisme de coupe s'étendant, au travail, transversalement à la direction de travail, une structure d'attelage destinée à être liée à un véhicule moteur, et une poutre-support liant, de manière articulée, le mécanisme de coupe à la structure d'attelage. Cette faucheuse connue comporte encore un organe de dépose destiné à maintenir la poutre-support dans une position de dépose de sorte que la structure d'attelage puisse être pivotée autour de l'axe de l'articulation liant la poutre-support à la structure d'attelage. Cette faucheuse connue comporte enfin encore un organe de traction comportant un ressort destiné, durant le travail, à délester le mécanisme de coupe et dont l'action peut être annulée en vue de la dépose.

L'organe de traction de cette faucheuse connue s'étend entre la structure d'attelage et la poutre-support. Cet organe de traction comporte un tube pourvu, à son extrémité longitudinale en regard de la structure d'attelage, d'un trou oblong s'étendant suivant la direction dudit tube. Un doigt, fixé à la structure d'attelage, traverse le trou oblong qui autorise un mouvement relatif de l'organe de traction par rapport audit doigt sur une longueur égale à celle du trou oblong.

L'organe de traction possède également un tirant monté de façon coulissante dans le tube et dont l'extrémité libre est liée à la poutre-support au moyen d'un axe de retenue. Celui-ci s'étend parallèlement à la direction de travail et peut être pivoté autour de son axe géométrique.

Le guidage du tirant par rapport au tube est assuré par deux tiges de centrage prolongeant ledit tube. Un disque solidaire du tirant possède deux trous pour le passage des tiges de centrage. De plus, entre ce disque et un anneau porté par les extrémités libres des tiges de centrage, s'étend un ressort de compression qui tend à éloigner le disque de l'anneau. Ce faisant, le ressort de compression tend, au travail, à réduire la longueur de l'organe de traction, afin de délester le mécanisme de coupe.

Pour annuler l'action de l'organe de traction en vue de la dépose, il est prévu que l'extrémité du tirant qui est à l'intérieur du tube vienne en butée contre une broche mise en place par l'utilisateur à cet effet. De cette sorte, il est avantageusement possible, en position de dépose dans laquelle la poutre-support repose sur l'organe de dépose, de pivoter la structure d'attelage par rapport à la poutre-support autour de l'axe du premier tourillon dans la limite autorisée par le trou oblong. Ceci facilite substantiellement l'attelage de la faucheuse à un tracteur.

Cette faucheuse connue présente toutefois certains inconvénients.

En effet, pour délester correctement le mécanisme de coupe durant ses déplacements en hauteur, la longueur de précontrainte du ressort de compression doit être relativement grande; sa longueur à vide doit donc être importante. Compte tenu de cela, son montage et son démontage en cas de besoin sont peu aisés.

Du reste, quand la faucheuse repose sur le sol en position de dépose, le ressort de compression est très fortement comprimé. Il est donc continuellement sous forte contrainte, même lorsque la faucheuse n'est pas utilisée.

On comprendra également que le délestage du mécanisme de coupe procuré par l'organe de traction de cette faucheuse connue n'est pas optimal, étant donné que l'organe de traction agit entre la structure d'attelage et la poutre-support.

Dans le document NL-A-7115956 est décrite une faucheuse comportant également un mécanisme de coupe s étendant, au travail, transversalement à la direction de travail, une structure d'attelage destinée à être liée à un véhicule moteur, et une poutre-support liant, de manière articulée, le mécanisme de coupe à la structure d'attelage.

Cette faucheuse connue comporte encore un organe de traction comportant entre autres un ressort de traction destiné, durant le travail, à délester le mécanisme de coupe.

L'organe de traction de cette faucheuse connue s'étend entre la structure d'attelage et la poutre-support. Cet organe de traction comporte un tube lié à son extrémité longitudinale en regard de la structure d'attelage à cette dernière au moyen d'une articulation d'axe dirigé suivant la direction d'avance.

L'organe de traction comporte également une tringle dont l'une des extrémités s'étend dans le tube et dont l'autre extrémité est liée à la poutre-support au moyen d'une articulation.

L'extrémité de la tringle s'étendant à l'intérieur du tube est pourvue d'un trou oblong s'étendant suivant l'axe longitudinal commun de la tringle et du tube, ainsi que d'un trou d'extrémité. Le tube, quant à lui, présente une première série de trois trous près de son extrémité en regard de la structure d'attelage et une deuxième série de trois trous près de son autre extrémité. Une broche est destinée à être introduite dans l'un des trois trous de la deuxième série de trous et à traverser ainsi le trou oblong de la tringle durant le travail, alors que ladite broche est destinée à être introduite dans l'un des trois trous de la première série de trous et le trou d'extrémité de la tringle durant le transport.

Le ressort de traction, enfin, est implanté entre le tube et la tringle et tend à faire rentrer la tringle dans le tube. Ce faisant, la tringle tire sur la poutre-support et tend à faire pivoter celle-ci, vers le haut, autour de l'axe de l'articulation liant la poutre-support à la structure d'attelage, ce qui a pour effet de délester l'extrémité du mécanisme de coupe liée à la poutre-support.

Le mécanisme de coupe peut s'adapter au contour du sol durant le travail grâce au trou oblong de la tringle. On comprendra bien entendu que le vérin implanté entre la structure d'attelage et le mécanisme de coupe (ce vérin sert à pivoter le mécanisme de coupe en position verticale de transport) autorise le déplacement du mécanisme de coupe lors du travail.

Pour le transport, on raccourcit le vérin, ce qui a pour effet de faire pivoter le mécanisme de coupe, vers le haut, autour de l'axe de l'articulation liant le mécanisme de coupe à la poutre-support, puis de faire pivoter l'ensemble poutre-support-mécanisme de coupe, vers le haut, autour de l'axe de l'articulation liant la poutre-support à la structure d'attelage. Ceci a pour effet de faire rentrer la tringle dans le tube de l'organe de traction. Lorsque le trou d'extrémité prévu à l'extrémité de la tringle s'étendant dans le tube arrive en face d'un des trois trous de la première série de trous, on y introduit la broche qui avait, au préalable, été retirée, et on verrouille ainsi le pivotement entre la structure d'attelage et la poutre-support.

Le but de la présente invention consiste à remédier aux inconvénients de la machine de coupe connue par le document FR-A-2 437 767, tout en conservant l'avantage de la facilité de l'attelage au dispositif de relevage d'un véhicule moteur.

A cet effet, la machine de coupe selon la présente invention est caractérisée en ce que :
a) l'organe de traction comporte en sus un dispositif de commande destiné à détendre ledit ressort en vue de la dépose et articulé à la structure d'attelage à l'aide d'une liaison pivot d'axe au moins sensiblement parallèle à l'axe du premier tourillon,
b) le ressort est un ressort de traction articulé, à l'une de ses extrémités, au mécanisme de coupe au moyen d'une liaison ayant un axe au moins sensiblement parallèle à l'axe du deuxième tourillon et, à l'autre de ses extrémités, à un tirant lié au dispositif de commande et d'axe au moins sensiblement confondu avec l'axe longitudinal du ressort de traction,
c) il est prévu un organe de verrouillage, indépendant de l'organe de traction, pour verrouiller le pivotement de la poutre-support par rapport à la structure d'attelage autour de l'axe du premier tourillon lors du transport, et dont l'action est annulée lors du travail et de la dépose.

Le dispositif de commande qui est avantageusement articulé à la structure d'attelage à l'aide d'une liaison pivot, permet ainsi de détendre le ressort en vue de la dépose de la machine de coupe. De cette sorte, le ressort n'est plus sous contrainte (ou du moins sous une contrainte relativement faible) lorsque la machine de coupe est dételée du véhicule tracteur et repose sur le sol. La structure d'attelage peut donc être facilement pivotée autour de l'axe géométrique du premier tourillon. On conserve ainsi la facilité de l'attelage et du dételage de la machine de coupe. Du reste, durant toute la période de non-utilisation de la machine de coupe, le métal du ressort ne travaille pas (ou du moins relativement peu) ce qui est bénéfique pour la durée de vie du ressort.

Comme le ressort de l'organe de traction de la machine de coupe selon l'invention est en sus un ressort de traction, il en découle également que le montage ou, en cas de besoin, le démontage dudit ressort se font très facilement sans risques d'accident et en ne nécessitant aucun outillage spécial.

Il convient également de préciser qu'un ressort de traction a une longueur à vide plus faible qu'un ressort de compression équivalent.

Ce ressort de traction est aussi implanté entre le mécanisme de coupe et le dispositif de commande lui-même articulé à la structure d'attelage. Le mécanisme de coupe est ainsi mieux délesté puisque l'organe de traction crée une action de délestage aux deux extrémités du mécanisme de coupe.

Enfin l'organe de verrouillage, indépendant de l'organe de traction, permet, lors du transport, un verrouillage optimal du pivotement de la poutre-support par rapport à la structure d'attelage autour de l'axe du premier tourillon, son action est annulée d'une part lors du travail et, d'autre part, lors de la dépose pour autoriser le pivotement de la structure d'attelage autour de l'axe géométrique du premier tourillon.

Comme le ressort de traction est détendu lors de la dépose de la machine de coupe, il n'y a pas non plus de risque, dans ce cas, que ledit ressort pivote l'ensemble poutre-support-structure d'attelage, vers le haut, autour de l'axe géométrique du deuxième tourillon.

Le tirant, lié au dispositif de commande, pourra en outre être muni d'un épaulement destiné à s'appuyer contre une butée escamotable du dispositif de commande, celle-ci étant destinée à occuper deux positions :
- une position de travail dans laquelle l'épaulement du tirant s'appuiera contre la butée, ce qui permettra au ressort de traction de délester le mécanisme de coupe,
et
- une position de dépose dans laquelle ladite butée sera escamotée, le mécanisme de coupe reposant alors longitudinalement sur le sol.

Le maintien de la butée dans sa position de travail pourra d'ailleurs être avantageusement réalisé au moyen d'un ressort.

De préférence, la butée et le ressort seront constitués d'un ressort à lame dont l'extrémité libre, destinée à collaborer avec l'épaulement du tirant, aura une forme de fourche.

Il pourra aussi être prévu que le dispositif de commande soit actionné au moyen d'une commande à distance permettant notamment d'actionner le dispositif de commande à partir du véhicule moteur.

Il pourra en sus être prévu que l'organe de dépose soit lié au premier tourillon ou à la poutre-support dans le voisinage dudit premier tourillon et de sorte à pouvoir occuper deux positions :
- une position de travail dans laquelle l'organe de dépose sera escamoté,
et
- une position de dépose dans laquelle l'organe de dépose sera destiné à reposer sur le sol pour soutenir la poutre-support.

Le passage de l'organe de dépose de sa position de travail dans sa position de dépose, et inversement, pourra d'ailleurs être avantageusement réalisé à l'aide d'un moyen de manoeuvre, de préférence un vérin commandé à partir du véhicule moteur.

Dans une réalisation particulièrement intéressante, la commande à distance du dispositif de commande pourra être actionnée à l'aide de l'organe de dépose de sorte que :
- lorsque l'organe de dépose se trouvera dans sa position de travail, le ressort de traction puisse délester le mécanisme de coupe,
et
- lorsque l'organe de dépose se trouvera dans sa position de dépose, l'action du ressort de traction soit annulée.

En manoeuvrant ainsi l'organe de dépose, on actionnera simultanément le dispositif de commande.

Cette commande à distance pourra comporter une gaine à l'intérieur de laquelle pourra être translaté un câble lié d'une part directement ou indirectement à l'organe de dépose et, d'autre part, au dispositif de commande.

Il pourra par ailleurs être prévu que l'organe de verrouillage comporte :
- un limiteur, de longueur variable, lié, à l'une de ses extrémités longitudinales, à la structure d'attelage au moyen d'une articulation et, à l'autre de ses extrémités longitudinales, à la poutre-support au moyen d'une autre articulation, chacune desdites articulations présentant au moins un axe au moins sensiblement parallèle à l'axe du premier tourillon,
et
- un verrou destiné à verrouiller ledit limiteur durant le transport.

Dans une réalisation particulièrement intéressante, le limiteur pourra comporter un tube articulé à la structure d'attelage et une tringle articulée, à l'une de ses extrémités longitudinales, à la poutre-support, tandis qu'à l'autre de ses extrémités, la tringle comportera un trou oblong s'étendant à l'intérieur du tube et traversé par un axe fixé audit tube. Par ailleurs, le verrou sera articulé à la poutre-support au moyen d'une liaison pivot d'axe au moins sensiblement confondu avec l'axe de l'articulation liant la tringle du limiteur à la poutre-support, de sorte que ledit verrou puisse occuper deux positions extrêmes par pivotement autour de l'axe de ladite liaison pivot :
- une position de travail et de dépose dans laquelle le limiteur limitera le pivotement de la poutre-support par rapport à la structure d'attelage autour de l'axe du premier tourillon,
et
- une position de transport dans laquelle le limiteur sera verrouillé en position ouverte, c'est-à-dire lorsque sa longueur sera la plus grande.

Le mise et le maintien du verrou dans la position déverrouillée de travail et de dépose pourront être réalisés au moyen d'un ressort. Du reste, il pourra être prévu une commande à distance permettant d'amener et de maintenir directement ou indirectement le verrou en position verrouillée de transport.

Cette commande à distance pourra être une cordelette destinée à être manipulée à partir du véhicule moteur.

Il pourra en outre également être prévu que le mécanisme de coupe puisse être amené dans une position relevée de transport, par pivotement autour de l'axe du deuxième tourillon, à l'aide d'un organe de manoeuvre.

Avantageusement, cet organe de manoeuvre pourra être un vérin lié, à l'une de ses extrémités longitudinales, au mécanisme de coupe au moyen d'un levier pivotant et, à l'autre de ses extrémités longitudinales, à la structure d'attelage à l'aide d'une articulation présentant au moins un axe au moins sensiblement parallèle à l'axe du premier tourillon.

Le mécanisme de coupe pourra aussi comporter un organe de maintien maintenant le verrou de l'organe de verrouillage dans sa position verrouillée lorsque le mécanisme de coupe sera en position relevée de transport.

De plus, il pourra être prévu qu'entre l'organe de maintien et le verrou s'étende un organe élastiquement déformable destiné notamment à débuter le mouvement de descente du mécanisme de coupe. Cet organe élastiquement déformable pourra être constitué d'une butée en caoutchouc fixée au verrou.

La machine de coupe pourra comporter en sus un moyen de verrouillage destiné à verrouiller le mécanisme de coupe dans sa position de transport. Avantageusement, le déverrouillage du mécanisme de coupe pourra alors être réalisé au moyen d'une commande à distance permettant d'agir sur le moyen de verrouillage.

Quand il sera prévu que le mécanisme de coupe puisse être amené en position relevée de transport et que le moyen de verrouillage soit un loquet lié à la poutre-support au moyen d'une liaison pivot d'axe au moins sensiblement parallèle à l'axe du deuxième tourillon et destiné à venir s'accrocher à un organe d'accrochage du mécanisme de coupe, le déplacement et le maintien du loquet dans sa position verrouillée pourront être réalisés à l'aide d'un ressort.

Il pourra également être avantageusement prévu que, vu suivant la direction d'avance au travail, l'axe du premier tourillon s'étende au moins sensiblement au centre du triangle défini par les trois points d'attelage de la structure d'attelage.

Du reste, la structure d'attelage pourra comporter un cadre muni des trois points d'attelage et un dispositif de liaison liant ledit cadre au premier tourillon, de sorte que le dispositif de liaison puisse autoriser, le cas échéant, un pivotement du premier tourillon par rapport au cadre autour d'un axe géométrique dirigé vers le haut.

Ce dispositif de liaison pourra comporter un tourillon lié à son extrémité inférieure au premier tourillon et articulé au cadre à l'aide d'une liaison pivot d'axe géométrique au moins sensiblement vertical.

D'autres caractéristiques et avantages de l'invention apparaissent dans la description suivante de deux exemples non limitatifs de réalisation faite en référence au dessin annexé sur lequel :
- la figure 1 représente, en position de travail, une machine de coupe selon l'invention vue de l'arrière dans le sens d'avance au travail et liée à un véhicule moteur;
- la figure 2 est une vue de dessus de la machine de coupe représentée sur la figure 1;
- la figure 3 représente, en position de transport, la machine de coupe des figures 1 et 2, vue de l'arrière dans le sens d'avance;
- la figure 4 représente, en position de dépose, la machine de coupe des figures 1 à 3, vue de l'arrière (dans le sens d'avance qu'a la machine au travail);
- la figure 5 représente, à une échelle agrandie, une vue de l'organe de verrouillage et du loquet destiné à verrouiller le mécanisme de coupe dans sa position relevée de transport, lorsque l'utilisateur agit sur la cordelette dudit loquet;
- la figure 6 représente, à une échelle agrandie, une vue du dispositif de commande et d'une partie du ressort de traction;
- la figure 7 représente une coupe du dispositif de commande suivant le plan VII défini sur la figure 6;
- la figure 8 représente une coupe du dispositif de commande suivant le plan VIII défini sur la figure 7;
- la figure 9 représente, en position de transport, un autre exemple de réalisation d'une machine de coupe selon l'invention, vue de l'arrière dans le sens d'avance et liée à un véhicule moteur;
- la figure 10 représente, en position de dépose, la machine de coupe de la figure 9 vue de l'arrière (dans le sens d'avance qu'a la machine au travail).

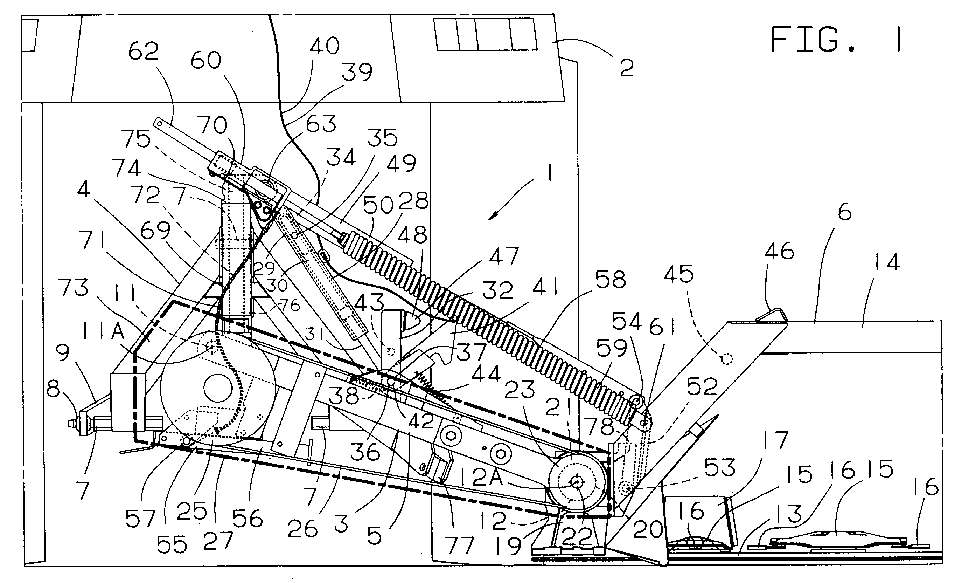

Sur les figures 1 à 8 apparaît une machine de coupe selon l'invention réalisée, dans l'exemple représenté, sous forme d'une faucheuse (1) attelée à un tracteur agricole (2).

Cette faucheuse (1) se compose principalement d'un châssis (3) comportant une structure d'attelage (4) et une poutre-support (5), et d'un mécanisme de coupe (6).

La structure d'attelage (4) est munie, à sa partie frontale, de trois points d'attelage (7) destinés à être liés aux trois points d'attelage (8) du dispositif de relevage (9) du tracteur agricole (2). La poutre-support (5) quant à elle, s'étend, lors du travail, transversalement à la direction de travail (10) et au moins sensiblement au même niveau que la structure d'attelage (4). A l'une de ses extrémités longitudinales, la poutre-support (5) est articulée à la structure d'attelage (4) au moyen d'un premier tourillon (11) d'axe géométrique (11A) dirigé vers l'avant, s'étendant, en vue suivant la direction d'avance (10) au travail, au moins sensiblement dans le voisinage du centre du triangle défini par les trois points d'attelage (7) de la structure d'attelage (4). A son autre extrémité longitudinale, la poutre-support (5) du châssis (3) est articulée à une extrémité longitudinale du mécanisme de coupe (6) au moyen d'un deuxième tourillon (12) d'axe géométrique (12A) dirigé vers l'avant. Grâce à un tel châssis, le mécanisme de coupe (6) peut, lors du travail, s'étendre à côté de la voie du tracteur (2) et s'adapter aisément au relief du sol.

Le mécanisme de coupe (6) comporte une barre de coupe (13) surmontée d'une structure porteuse (14). Comme représenté sur les figures 1 à 4, la barre de coupe (13) est équipée d'une pluralité de disques (15) munis à leur périphérie d'outils de coupe (16). Au travail, ces disques (15) tournent autour d'axes géométriques dirigés vers le haut. De plus, d'une manière connue de l'homme de l'art, les disques (15) qui s'étendent chacun à une extrémité longitudinale de la barre de coupe (13) sont surmontés d'un tambour (17) tournant autour du même axe géométrique que le disque (15) qu'il surmonte. Ces deux tambours (17) calibrent l'andain de produit coupé par les outils de coupe (16).

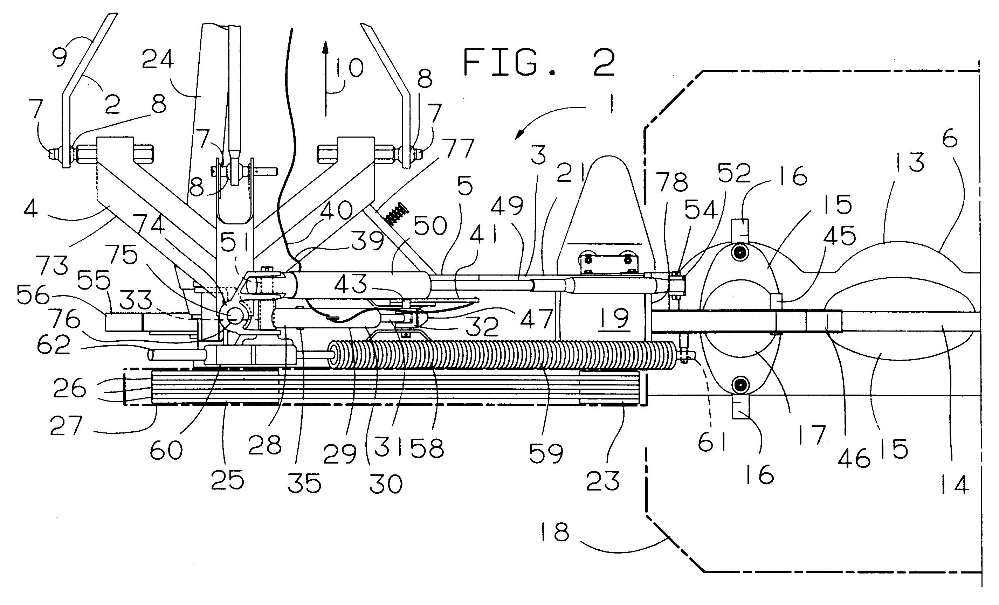

La structure porteuse (14) qui surmonte la barre de coupe (13) est notamment destinée à supporter des organes de protection (18) (représentés en traits mixtes sur la figure 2) . Cette structure porteuse (14) est fixée à la barre de coupe (13) au moyen d'un carter de renvoi (19). Celui-ci remplit une double fonction : c'est d'une part par son intermédiaire que le mécanisme de coupe (6) est lié à la poutre-support (5), et il contient d'autre part une partie des organes d'entraînement entraînant les disques (15) et les tambours (17).

Le carter de renvoi (19) est en effet muni de deux portées cylindriques (20) matérialisant le deuxième tourillon (12) et susceptibles de tourner dans les ailes d'une chape (21) solidaire de la poutre-support (5). Ces portées cylindriques (20) sont d'une manière connue de l'homme de l'art, réalisées sous forme de paliers dans lesquels est guidé en rotation un arbre d'entrée (22), dont l'axe de rotation est confondu avec l'axe géométrique (12A) du deuxième tourillon (12). C'est au moyen de cet arbre d'entrée (22) que les disques (15) et les tambours (17) de la barre de coupe (13) sont entraînés en rotation.

A l'arrière, l'arbre d'entrée (22) s'étend au-dehors du carter de renvoi (19) et est lié en rotation avec une poulie (23). Cette poulie (23) fait partie des organes de transmission de la faucheuse (1) qui transmettent le mouvement depuis la prise de force (non représentée) du tracteur (2) jusqu'à l'arbre d'entrée (22) du carter de renvoi (19). Ces organes de transmission comportent par ailleurs un arbre de transmission à joints universels (24) (figure 2), une poulie (25) et des courroies (26). L'arbre de transmission (24) est lié en rotation avec la poulie (25) liée à la poutre-support (5) et ayant un axe de rotation dirigé au moins sensiblement suivant la direction d'avance (10) au travail lorsque la faucheuse (1) est en position de fauchage (figures 1 et 2). La transmission du mouvement de la poulie (25) à la poulie (23) est assurée par les courroies (26) qui s'enroulent sur lesdites poulies (23, 25). Un capot de protection (27) (représenté en traits mixtes) entoure partiellement les poulies (23, 25) et les courroies (26).

Comme visible sur les figures 1 à 5, le châssis (3) de cette faucheuse (1) selon l'invention est muni d'un organe de verrouillage (28) destiné, lorsque cela est souhaité, à verrouiller le pivotement relatif de la poutre-support (5) par rapport à la structure d'attelage (4) autour de l'axe géométrique (11A) du premier tourillon (11). Cet organe de verrouillage (28) est constitué d'un limiteur (29), comportant un tube (30) et une tringle (31), et d'un verrou (32).

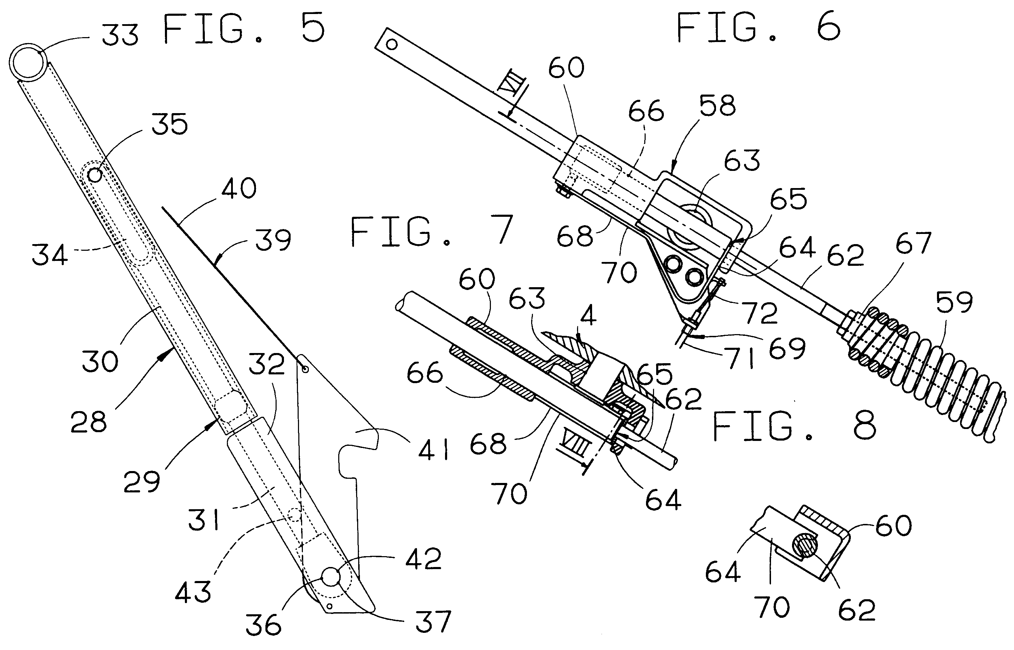

Le tube (30) est lié à l'une de ses extrémités longitudinales à la partie supérieure de la structure d'attelage (4) au moyen d'une articulation (33) (figure 5) présentant un axe géométrique au moins sensiblement parallèle à l'axe géométrique (11A) du premier tourillon (11). A l'intérieur de ce tube (30) coulisse une partie de la tringle (31) munie d'un trou oblong (34) d'axe longitudinal au moins sensiblement confondu avec l'axe longitudinal dudit tube (30). Un axe (35), fixé au tube (30), traverse le trou oblong (34) de part en part, limitant ainsi la translation de la tringle (31) dans le tube (30). L'extrémité longitudinale de l'autre partie de la tringle (31), qui s'étend à l'extérieur du tube (30), est liée à la partie médiane de la poutre-support (5) à l'aide d'une articulation (36) présentant, comme la précédente, un axe géométrique au moins sensiblement parallèle à l'axe géométrique (11A) du premier tourillon (11). De ce fait, le limiteur (29) limite le pivotement de la poutre-support (5) par rapport à la structure d'attelage (4) autour de l'axe géométrique (11A) du premier tourillon (11) et par là même, le déplacement vers le bas du deuxième tourillon (12) qui lie le mécanisme de coupe (6) à la poutre-support (5). L'utilisateur peut donc, en vue du transport par exemple, actionner le dispositif de relevage (9) du tracteur (2), de sorte à allonger au maximum le limiteur (29) (figure 5) et à soulever le mécanisme de coupe (6).

Dans cette position de type "andain", le limiteur (29) peut être verrouillé au moyen du verrou (32). A cet effet, le verrou (32) est articulé à la poutre-support (5) au moyen d'une liaison pivot (37), d'axe géométrique au moins sensiblement confondu avec l'axe géométrique de l'articulation (36) liant la tringle (31) du limiteur (29) à ladite poutre-support (5). De cette sorte, ledit verrou (32) peut être pivoté autour dudit axe géométrique d'une position déverrouillée dans laquelle la tringle (31) coulisse à l'intérieur du tube (30) vers une position verrouillée dans laquelle le verrou (32) coiffe la partie de la tringle (31) qui s'étend à l'extérieur du tube (30). Dans cette dernière position, le verrou (32) empêche toute translation de la tringle (31) à l'intérieur du tube (30), donc l'organe de verrouillage (28) est verrouillé.

La mise en position déverrouillée du verrou (32) est réalisée sous l'action d'un ressort (38). Celui-ci est agencé entre la poutre-support (5) et le verrou (32). A l'inverse, une commande à distance (39) permet à l'utilisateur d'amener et de maintenir au moins provisoirement le verrou (32) en position verrouillée. Comme représenté sur les figures 1 à 5, la commande à distance (39) est une cordelette (40), destinée d'une part à être manipulée par l'utilisateur à partir du tracteur (2), et liée d'autre part à un loquet (41) susceptible de pivoter le verrou (32) dans sa position verrouillée. En effet, le verrou (32) comporte un axe (43) par l'intermédiaire duquel le loquet (41) pivote ledit verrou (32) dans sa position verrouillée lorsque l'utilisateur tire sur la cordelette (40). A cet effet, le loquet (41) est articulé à la poutre-support (5) à l'aide d'une liaison pivot (42) d'axe géométrique au moins sensiblement confondu avec l'axe géométrique de la liaison pivot (37) du verrou (32). L'utilisateur peut donc, lorsque la faucheuse (1) est en position andain, verrouiller le limiteur (29) en tirant sur la cordelette (40).

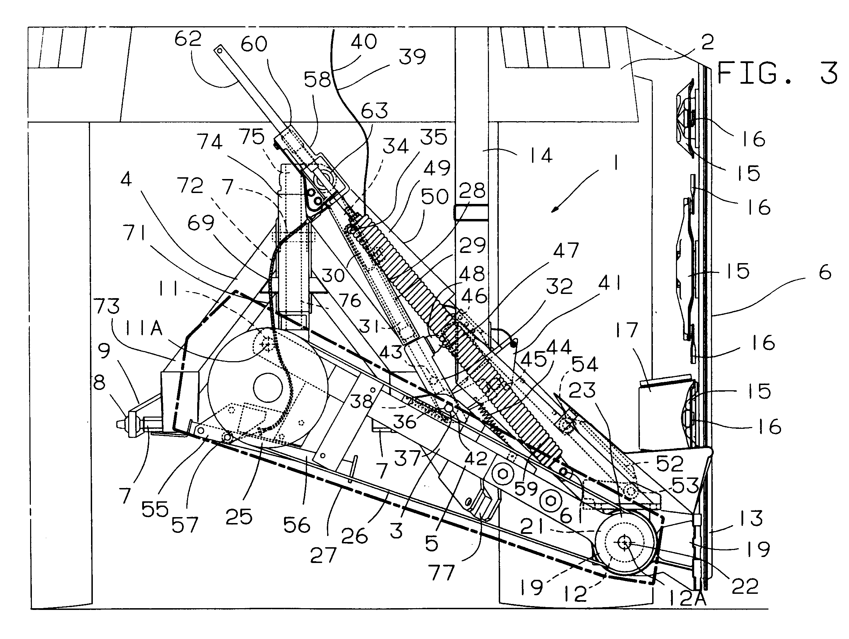

Dès que l'utilisateur cesse de tirer sur la cordelette (40), le loquet (41) pivote vers sa position initiale sous l'action d'un ressort (44) fixé à la poutre-support (5). Avantageusement, le loquet (41) permet, en sus, de verrouiller le mécanisme de coupe (6), lorsque celui-ci est amené dans une position relevée de transport (figure 3) par pivotement autour de l'axe géométrique (12A) du deuxième tourillon (12). En effet, comme visible sur la figure 3, la structure porteuse (14) du mécanisme de coupe (6) comporte un organe d'accrochage (45) auquel le loquet (41) s'accroche lorsque la cordelette (40) est détendue. Il est ainsi aisément possible de verrouiller le mécanisme de coupe (6) dans sa position relevée de transport. Le déverrouillage du mécanisme de coupe (6) s'effectue en pivotant le loquet (41) à l'encontre du ressort (44) par l'intermédiaire de la cordelette (40).

Sur la figure 3, on voit également que le maintien du verrou (32) dans sa position verrouillée est assuré par un organe de maintien (46). Celui-ci est fixé à la structure porteuse (14) du mécanisme de coupe (6) et maintient le verrou (32) dans sa position verrouillée lorsque le mécanisme de coupe (6) est en position relevée. De ce fait, dès que le mécanisme de coupe (6) est relevé, l'organe de verrouillage (28) est verrouillé, ce qui empêche le pivotement de la poutre-support (5) par rapport à la structure d'attelage (4) autour de l'axe géométrique (11A) du premier tourillon (11).

En outre, le verrou (32) de l'organe de verrouillage (28) est surmonté d'un organe élastiquement déformable (47) qui est réalisé sous forme de butée en caoutchouc (48). A la fin de la mise en position de transport du mécanisme de coupe (6), l'organe de maintien (46) dudit mécanisme de coupe (6) comprime quelque peu cette butée (48), de telle sorte que celle-ci soit capable, lors du déplacement du mécanisme de coupe (6) de la position de transport vers la position andain, de débuter ce mouvement.

A l'inverse, le passage du mécanisme de coupe (6) de la position andain, où il s'étend au moins sensiblement horizontalement au-dessus du sol, dans la position relevée de transport est réalisé au moyen d'un organe de manoeuvre (49). Dans cet exemple de réalisation, cet organe de manoeuvre (49) est constitué par un vérin hydraulique simple effet (50). Ce vérin hydraulique (50) est lié à l'une de ses extrémités longitudinales à la structure d'attelage (4) au moyen d'une articulation (51) (figure 2) et à l'autre de ses extrémités longitudinales à la structure porteuse (14) du mécanisme de coupe (6) par l'intermédiaire d'un levier pivotant (52). Celui-ci est lié à la structure porteuse (14) du mécanisme de coupe (6) par un axe (53) et au vérin hydraulique (50) par un axe supplémentaire (54). Du reste, l'articulation (51) liant le vérin hydraulique (50) à la structure d'attelage (4) et l'articulation (33) liant le tube (30) de l'organe de verrouillage (28) à ladite structure d'attelage (4) sont au moins sensiblement coaxiales.

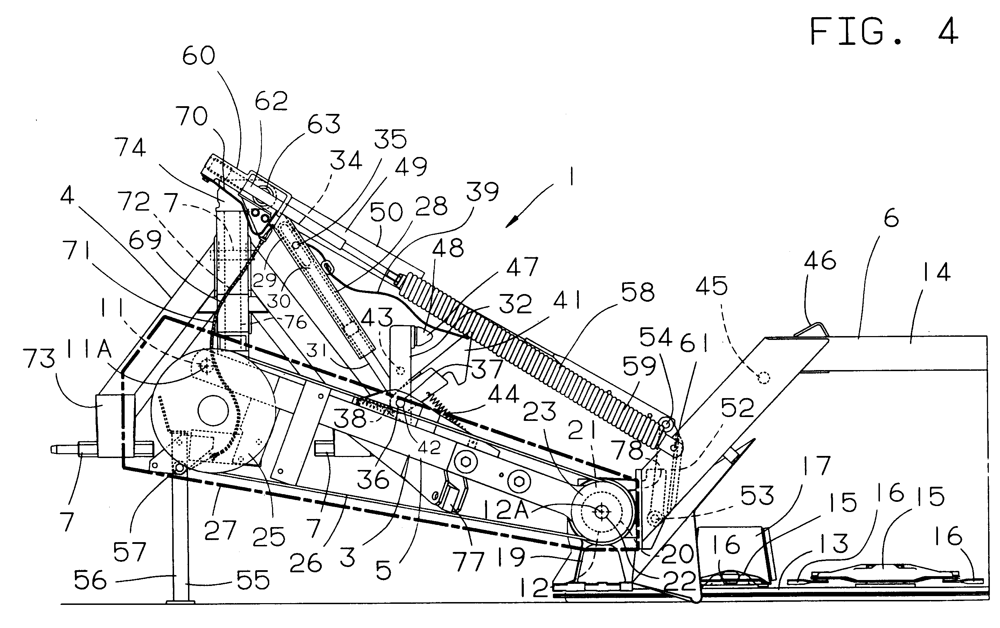

Lors de la dépose de cette faucheuse (1) (figure 4), le mécanisme de coupe (6) repose longitudinalement sur le sol et la poutre-support (5) est supportée par un organe de dépose (55). Dans cet exemple de réalisation, l'organe de dépose (55) est une béquille (56) liée à la poutre-support (5) dans le voisinage du premier tourillon (11) à l'aide d'une liaison pivot (57) d'axe géométrique au moins sensiblement parallèle à l'axe géométrique (11A) du premier tourillon (11). De ce fait, la béquille (56) peut, en vue du transport, être pivotée d'une position de dépose dans laquelle la béquille (56) est destinée à supporter la poutre-support (5) dans une position de transport et de travail, dans laquelle la béquille (56) est escamotée.

Sur la figure 4 qui montre la faucheuse (1) en position de dépose, on voit également que l'organe de verrouillage (28) est déverrouillé, c'est-à-dire qu'il est possible dans cette position de pivoter la structure d'attelage (4) par rapport à la poutre-support (5) autour de l'axe géométrique (11A) du premier tourillon (11). Un tel agencement facilite considérablement l'attelage de la faucheuse (1) aux trois points (8) du dispositif de relevage (9) du tracteur (2).

La faucheuse (1) selon l'invention comporte également un organe de traction (58) destiné à délester le mécanisme de coupe (6) au travail. Cet organe de traction (58) s'étend entre la structure d'attelage (4) et le mécanisme de coupe (6), et se compose principalement d'un ressort de traction (59) associé à un dispositif de commande (60). En effet, le ressort de traction (59) est articulé d'une part au mécanisme de coupe (6) au moyen d'une liaison pivot (61) d'axe géométrique au moins sensiblement parallèle à l'axe géométrique (12A) du deuxième tourillon (12) et d'autre part au dispositif de commande (60) au moyen d'un tirant (62) d'axe géométrique au moins sensiblement confondu avec l'axe longitudinal dudit ressort de traction (59). Le dispositif de commande (60), quant à lui, est articulé à la structure d'attelage (4) à l'aide d'une liaison pivot (63) d'axe géométrique au moins sensiblement parallèle à l'axe géométrique (11A) du premier tourillon (11). Avantageusement, dans cette réalisation selon l'invention, cette liaison pivot (63) liant le dispositif de commande (60) à la structure d'attelage (4) et l'articulation (51) liant le vérin hydraulique (50) à ladite structure d'attelage (4) sont au moins sensiblement coaxiales.

Sur les figures 6 à 8 apparaît plus particulièrement le dispositif de commande (60). Celui-ci permet d'annuler l'action du ressort de traction (59) en vue de la dépose, de sorte à pouvoir autoriser le pivotement de la structure d'attelage (4) autour de l'axe géométrique (11A) du premier tourillon (11). A cet effet, le dispositif de commande (60) comporte une butée escamotable (64) pouvant être mise en contact avec un épaulement (65) du tirant (62). Cette butée (64) peut donc occuper deux positions : une position de travail dans laquelle l'épaulement (65) du tirant (62) s'appuie contre ladite butée (64), ce qui permet au ressort de traction (59) d'alléger le mécanisme de coupe (6), et une position de dépose dans laquelle ladite butée (64) est escamotée, ce qui permet au tirant (62) de se translater dans le dispositif de commande (60), lorsque le mécanisme de coupe (6) s'étend longitudinalement sur le sol. Avantageusement, le tirant (62) est guidé dans le dispositif de commande (60) par une liaison cylindrique (66) et l'une de ses extrémités longitudinales est vissée dans un élément de liaison (67) solidaire du ressort de traction (59). Grâce à un tel agencement, l'effort de délestage du ressort de traction (59) peut aisément être réglé en vissant plus ou moins profondément le tirant (62) dans l'élément de liaison (67) du ressort de traction (59).

La mise dans la position de travail de la butée (64) est réalisée au moyen d'un ressort (68), tandis qu'une commande à distance (69) commande la mise dans la position de dépose de la butée (64). Comme représenté sur les figures 1, 3, 4, 6, 7 et 8, la butée (64) et son ressort (68) sont avantageusement combinés en un ressort à lame (70) dont l'extrémité libre a une forme de fourche. On voit également sur quelques unes de ces figures que la commande à distance (69) du dispositif de commande (60) est actionnée à l'aide de la béquille (56), de sorte que lorsque celle-ci se trouve dans sa position de travail, le ressort de traction (59) peut délester le mécanisme de coupe (6), et inversement lorsque la béquille (56) se trouve dans sa position de dépose, l'action du ressort de traction (59) est annulée. A cet effet, dans cet exemple de réalisation selon l'invention, la commande à distance (69) du dispositif de commande (60) comporte une gaine (71) à l'intérieur de laquelle peut être translaté un câble (72) lié d'une part à la béquille (56) et d'autre part à la butée (64) du dispositif de commande (60). De ce fait, dès que la béquille (56) est déplacée de sa position de travail vers sa position de dépose, ou vice versa, cela a pour effet de translater le câble (72) dans la gaine (71) et de rapprocher ou d'éloigner la butée (64) du tirant (62).

On peut encore voir sur les figures 1 à 4, que la structure d'attelage (4) de cette faucheuse (1) selon l'invention est constituée d'un cadre (73) supportant les trois points d'attelage (7) et d'un dispositif de liaison (74) liant ledit cadre (73) au premier tourillon (11). Ce dispositif de liaison (74) comporte un tourillon (75) lié à son extrémité inférieure au premier tourillon (11) et articulé au cadre (73) de la structure d'attelage (4) à l'aide d'une liaison pivot (76) d'axe géométrique au moins sensiblement vertical. En outre, à l'extrémité supérieure du tourillon (75) du dispositif de liaison (74) sont fixés le dispositif de commande (60) de l'organe de traction (58), le tube (30) de l'organe de verrouillage (28) et une extrémité longitudinale du vérin hydraulique (50). Grâce à un tel agencement, il est possible, lorsque l'utilisateur le souhaite, de pivoter ensemble le mécanisme de coupe (6) et la poutre-support (5) vers l'arrière autour de l'axe géométrique de la liaison pivot (76) du dispositif de liaison (74). Par exemple, il est prévu, entre la poutre-support (5) et le cadre (73) de la structure d'attelage (4), un dispositif à déclenchement (77) qui autorise, au travail, le pivotement du mécanisme de coupe (6) autour de l'axe géométrique du dispositif de liaison (74) lorsque ledit mécanisme de coupe (6) rencontre un obstacle qu'il ne peut franchir. Par ailleurs, on pourrait également envisager de pivoter le mécanisme de coupe (6) relevé latéralement en position de transport, vers l'arrière dans le prolongement du tracteur (2) autour de l'axe géométrique de la liaison pivot (76) du dispositif de liaison (74). Une telle manoeuvre pourrait éventuellement réduire la largeur de transport.

La faucheuse (1) des figures 1 à 8 qui vient d'être décrite, fonctionne de la manière suivante.

La faucheuse (1) est liée aux trois points d'attelage (8) du dispositif de relevage (9) du tracteur (2) par l'intermédiaire de sa structure d'attelage (4), et l'arbre de transmission à joints universels (24) est accouplé à la prise de force (non représentée) dudit tracteur (2).

Au travail, le mécanisme de coupe (6) s'étend dans sa position de travail, telle que représentée sur les figures 1 et 2. Le tracteur (2) déplace la faucheuse (1) dans le sens d'avance (10) au travail et sa prise de force entraîne en rotation les disques (15) par l'intermédiaire des organes de transmission (24, 25, 26, 23, 22) et des divers organes d'entraînement logés dans le carter de renvoi (19) et la barre de coupe (13).

En tournant, les outils de coupe (16) des disques (15) coupent le produit à récolter qui se trouve dans la zone de coupe et les tambours (17) calibrent l'andain de produit coupé déposé derrière le mécanisme de coupe (6).

Etant donné que la poutre-support (5) peut pivoter quelque peu autour de l'axe géométrique (11A) du premier tourillon (11) et que le mécanisme de coupe (6) peut pivoter autour de l'axe géométrique (12A) du deuxième tourillon (12) par rapport à la poutre-support (5), ledit mécanisme de coupe (6) peut bien s'adapter au relief du terrain. Le ressort de traction (59), quant à lui, réduit la force avec laquelle le mécanisme de coupe (6) repose sur le sol.

Lorsque l'on désire transporter la faucheuse (1), on cesse d'entraîner en rotation les disques (15).

Pour placer la faucheuse (1) en position de transport (figure 3), on lève tout d'abord les trois points d'attelage (8) du dispositif de relevage (9) du tracteur (2), ce qui a pour effet de lever la faucheuse (1) lorsque le pivotement de la poutre-support (5) vers le bas autour de l'axe géométrique (11A) du premier tourillon (11) est stoppé par le limiteur (29) de l'organe de verrouillage (28) et que le levier pivotant (52) bute contre le carter de renvoi (19) qui comporte une face d'appui (78) prévue à cet effet. Dans cette position andain (non représentée) où le mécanisme de coupe (6) s'étend au moins sensiblement horizontalement au-dessus du sol, on agit ensuite sur la commande à distance (39), ce qui fait pivoter le loquet (41) en position déverrouillée (figure 5). Ce faisant, le loquet (41) entraîne le verrou (32) en position verrouillée de transport. Tout en maintenant l'action sur la commande à distance (39), on commande en sus le pivotement du mécanisme de coupe (6) autour de l'axe géométrique (12A) du deuxième tourillon (12) au moyen de l'organe de manoeuvre (49). Dès lors que le mécanisme de coupe (6) est dans sa position relevée de transport, on supprime l'action de la commande à distance (39) pour permettre au loquet (41) de s'accrocher à l'organe d'accrochage (45) du mécanisme de coupe (6) sous l'action du ressort (44). Par ailleurs, l'organe de maintien (46) du mécanisme de coupe (6) comprime l'organe élastiquement déformable (47) et maintient le verrou (32) en position verrouillée. Le transport peut donc commencer.

Avantageusement, le mécanisme de coupe (6) est ainsi immobilisé par rapport à la structure d'attelage (4), ce qui limite considérablement le balancement dudit mécanisme de coupe (6).

Pour déposer la faucheuse (1) (figure 4), l'utilisateur met en premier lieu, l'organe de dépose (55) manuellement en position de dépose. Ce faisant, la commande à distance (69) qui lie l'organe de dépose (55) au dispositif de commande (60) escamote la butée (64) en l'éloignant du tirant (62). Comme visible sur la figure 3, une telle manoeuvre est parfaitement possible, compte tenu du fait qu'au transport l'épaulement (65) du tirant (62) n'est plus en contact avec la butée (64). L'utilisateur agit ensuite sur l'autre commande à distance (39), ce qui écarte le loquet (41) de l'organe d'accrochage (45) du mécanisme de coupe (6). Ce dernier n'est alors plus verrouillé et l'action de l'organe élastiquement déformable (47) sur le mécanisme de coupe (6) suffit à débuter le pivotement du mécanisme de coupe (6) autour de l'axe géométrique (12A) du deuxième tourillon (12), dès que l'utilisateur autorise le retour au tracteur (2) de l'huile du vérin hydraulique (50). Ce faisant, le mécanisme de coupe (6) pivote vers sa position andain sous l'action de son poids tout en étant amorti par l'écoulement de l'huile du vérin hydraulique (50) qui retourne au tracteur (2). Dès que le mécanisme de coupe (6) a pivoté d'un certain angle, l'utilisateur supprime l'action de la commande à distance (39), ce qui a pour effet de ramener au moins sensiblement simultanément le loquet (41) près de sa position initiale sous l'action de son ressort (44) et le verrou (32) en position déverrouillée sous l'action de l'autre ressort (38).

Le pivotement du mécanisme de coupe (6) vers le bas est stoppé lorsque la tige du vérin hydraulique (50) est entièrement sortie. En abaissant ensuite les trois points d'attelage (8) du dispositif de relevage (9) du tracteur (2), on amène le mécanisme de coupe (6) en contact avec le sol. En continuant d'abaisser le dispositif de relevage (9), la poutre-support (5) pivote autour de l'axe géométrique (11A) du premier tourillon (11), ce qui a pour effet de décoller le levier pivotant (52) de la face d'appui (78) du carter de renvoi (19). La descente de la poutre-support (5) est stoppée lorsque dans cet exemple de réalisation la béquille (56) s'appuie sur le sol, c'est-à-dire lorsque l'axe (35) du limiteur (29) est au moins sensiblement au milieu du trou oblong (34) de la tringle (31). La faucheuse (1) repose alors longitudinalement sur le sol par l'intermédiaire du mécanisme de coupe (6) et de la béquille (56). La faucheuse (1) peut donc être dételée du tracteur (2).

Lorsque la faucheuse (1) est déposée, tel que représenté sur la figure 4, le ressort de traction (59) est détendu et le tirant (62) peut se translater dans le dispositif de commande (60). Dans cette position du reste, la structure d'attelage (4) peut pivoter par rapport à la poutre-support (5) autour de l'axe géométrique (11A) du premier tourillon (11) dans la limite autorisée par le limiteur (29). Comme dit précédemment, ceci facilite substantiellement l'attelage ultérieur de la faucheuse (1) au tracteur (2).

Pour amener la faucheuse (1) de sa position de dépose dans sa position de transport, on fera les différentes opérations en sens inverse. C'est-à-dire que l'on commence par lier les trois points d'attelage (7) de la structure d'attelage (4) aux trois points d'attelage (8) du dispositif de relevage (9) du tracteur (2) en pivotant si nécessaire la structure d'attelage (4) autour de l'axe géométrique (11A) du premier tourillon (11), et on accouple l'arbre de transmission à joints universels (24) à la prise de force (non représentée) du tracteur (2). Puis, on lève les trois points d'attelage (8) du dispositif de relevage (9) du tracteur (2), ce qui a pour effet de lever toute la faucheuse (1). L'utilisateur actionne ensuite la commande à distance (39) pour verrouiller le limiteur (29). Tout en maintenant cette action, il alimente l'organe de manoeuvre (49), de sorte à relever le mécanisme de coupe (6) dans sa position de transport. Dès que le mécanisme de coupe (6) est dans sa position relevée de transport, l'utilisateur supprime l'action de la commande à distance (39) pour permettre au loquet (41) de s'accrocher à l'organe d'accrochage (45) du mécanisme de coupe (6) sous l'action du ressort (44). Par ailleurs, l'organe de maintien (46) du mécanisme de coupe (6) comprime l'organe élastiquement déformable (47) et maintient le verrou (32) en position verrouillée. Il ne reste plus qu'à escamoter manuellement l'organe de dépose (55), ce qui par l'intermédiaire de la commande à distance (69) rapproche la butée (64) du tirant (62). Le transport peut débuter.

Pour placer la faucheuse (1) en position de travail, on commence par agir sur la commande à distance (39) du loquet (41) et on autorise simultanément le retour au tracteur (2) de l'huile contenue dans le vérin hydraulique (50). Ce faisant, le mécanisme de coupe (6) pivote vers sa position andain. Dès que le mécanisme de coupe (6) a pivoté d'un certain angle, on supprime l'action de la commande à distance (39), ce qui a pour effet de ramener au moins sensiblement simultanément le loquet (41) près de sa position initiale sous l'action de son ressort (44) et le verrou (32) en position déverrouillée sous l'action de l'autre ressort (38).

Le pivotement du mécanisme de coupe (6) vers le bas est stoppé lorsque la tige du vérin hydraulique (50) est entièrement sortie. En abaissant ensuite les trois points d'attelage (8) du dispositif de relevage (9) du tracteur (2), on amène le mécanisme de coupe (6) en contact avec le sol. on continue néanmoins d'abaisser le dispositif de relevage (9) jusqu'à ce que le limiteur (29) soit mi-ouvert, de sorte que le levier pivotant (52) soit décollé de la face d'appui (78) du carter de renvoi (19) et que l'axe (35) du limiteur (29) soit au moins sensiblement au milieu du trou oblong (34) de la tringle (31). En dernier lieu, on entraîne en rotation les disques (15) pour que le travail puisse débuter.

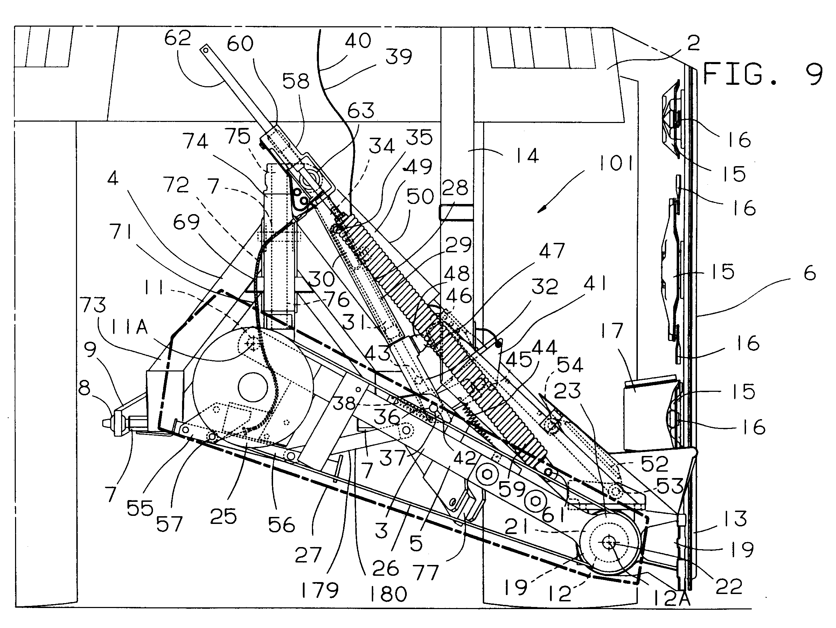

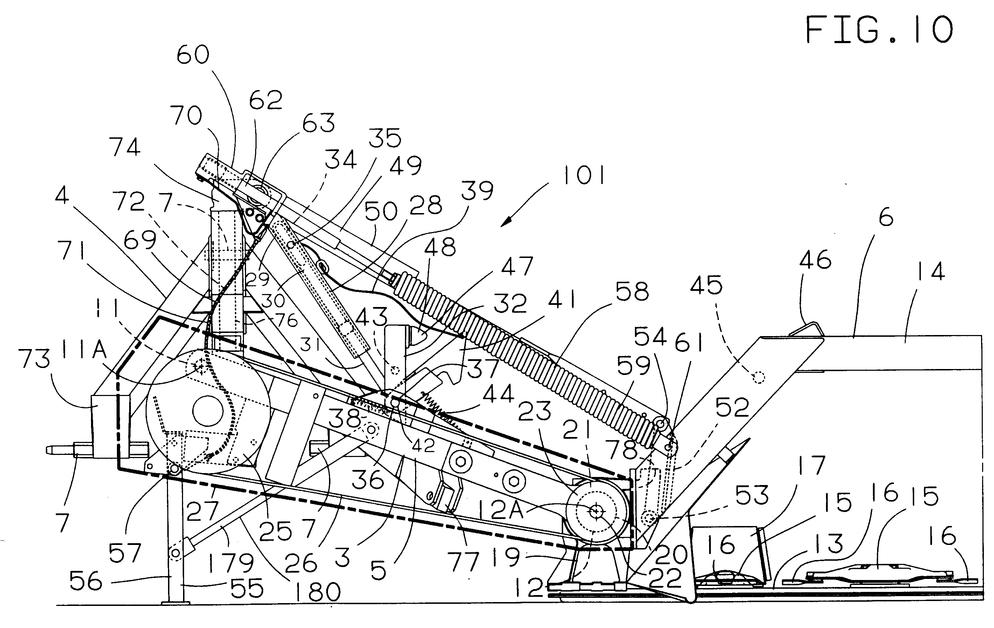

Les figures 9 et 10 montrent un autre exemple de réalisation d'une faucheuse (101) selon l'invention.

Cette faucheuse (101) comporte, sous des formes identiques, tous les moyens de la faucheuse (1) précédemment décrite ; ces moyens ne seront de ce fait pas redécrits. Cette faucheuse (101) se différencie toutefois de la précédente par un moyen de manoeuvre (179) destiné à amener l'organe de dépose (55) de sa position escamotée dans sa position de dépose et inversement. En effet, comme représenté sur les figures 9 et 10, un vérin hydraulique (180) à double effet ou équivalent s'étend entre la béquille (56) et la poutre-support (5). L'utilisateur peut ainsi actionner le distributeur correspondant de la centrale hydraulique du tracteur (2) afin de pivoter par l'intermédiaire du vérin hydraulique (180) la béquille (56) dans la position souhaitée.

Avantageusement, dans cet exemple de réalisation, l'utilisateur commande à distance le pivotement de la béquille (56). Cela lui évite donc de descendre du tracteur spécialement pour cette opération. En effet, mises à part les opérations d'attelage et de dépôt de la faucheuse (101), l'utilisateur peut, dans cet exemple de réalisation, commander l'ensemble de la faucheuse (101) à partir de son tracteur.

On comprendra encore que diverses modifications peuvent être apportées aux exemples de réalisation décrits sans sortir pour autant du domaine de protection tel que défini dans les revendications.

## Revendications

1. Machine de coupe (1, 101) comportant :
- un mécanisme de coupe (6) s'étendant, durant le travail, transversalement à la direction d'avance (10),
- une structure d'attelage (4) munie de trois points d'attelage (7) destinés à être liés aux trois points d'attelage (8) du dispositif de relevage (9) d'un véhicule moteur (2),
- une poutre-support (5) articulée d'une part à la structure d'attelage (4) au moyen d'un premier tourillon (11) d'axe (11A) dirigé vers l'avant et s'étendant, vu suivant la direction d'avance (10) au travail, au moins sensiblement dans le voisinage du triangle formé par les trois points d'attelage (7) de la structure d'attelage (4), et d'autre part au mécanisme de coupe (6) à l'aide d'un deuxième tourillon (12) d'axe (12A) dirigé vers l'avant,
- un organe de dépose (55) destiné à maintenir la poutre-support (5) dans une position de dépose de sorte que la structure d'attelage (4) puisse être pivotée autour de l'axe (11A) dudit premier tourillon (11),
et
- un organe de traction (58) comportant un ressort (59) destiné, durant le travail, à délester le mécanisme de coupe (6) et dont l'action peut être annulée en vue de la dépose,
caractérisée en ce que :
- l'organe de traction (58) comporte en sus un dispositif de commande (60) destiné à détendre ledit ressort (59) en vue de la dépose et articulé à la structure d'attelage (4) à l'aide d'une liaison pivot (63) d'axe au moins sensiblement parallèle à l'axe (11A) du premier tourillon (11),
- le ressort (59) est un ressort de traction articulé, à l'une de ses extrémités, au mécanisme de coupe (6) au moyen d'une liaison (61) ayant un axe au moins sensiblement parallèle à l'axe (12A) du deuxième tourillon (12) et, à l'autre de ses extrémités, à un tirant (62) lié au dispositif de commande (60) et d'axe au moins sensiblement confondu avec l'axe longitudinal du ressort de traction (59),
et
- il est prévu un organe de verrouillage (28), indépendant de l'organe de traction (58), pour verrouiller le pivotement de la poutre-support (5) par rapport à la structure d'attelage (4) autour de l'axe (11A) du premier tourillon (11) lors du transport, et dont l'action est annulée lors du travail et de la dépose.

2. Machine de coupe selon la revendication 1, caractérisée en ce que le tirant (62) est muni d'un épaulement (65) destiné à s'appuyer contre une butée escamotable (64) du dispositif de commande (60), ladite butée escamotable (64) pouvant occuper deux positions :
- une position de travail dans laquelle l'épaulement (65) du tirant (62) s'appuie contre ladite butée (64), ce qui permet au ressort de traction (59) de délester le mécanisme de coupe (6),
et
- une position de dépose dans laquelle ladite butée (64) est escamotée, le mécanisme de coupe (6) reposant alors longitudinalement sur le sol.

3. Machine de coupe selon la revendication 2, caractérisée en ce que la butée (64) est maintenue dans sa position de travail au moyen d'un ressort (68).

4. Machine de coupe selon la revendication 3, caractérisée en ce que la butée (64) et le ressort (68) sont constitués d'un ressort à lame (70) dont l'extrémité libre a une forme de fourche.

5. Machine de coupe selon l'une au moins des revendications 1 à 4, caractérisée en ce que le dispositif de commande (60) est actionné au moyen d'une commande à distance (69).

6. Machine de coupe selon l'une au moins des revendications 1 à 5, caractérisée en ce que l'organe de dépose (55) est lié au premier tourillon (11) ou à la poutre-support (5) dans le voisinage dudit premier tourillon (11), et qu'il peut occuper deux positions :
- une position de travail, dans laquelle l'organe de dépose (55) est escamoté,
et
- une position de dépose dans laquelle l'organe de dépose (55) est destiné à reposer sur le sol pour soutenir la poutre-support (5).

7. Machine de coupe selon la revendication 6, caractérisée en ce que l'organe de dépose (55) peut être amené de sa position de travail dans sa position de dépose, et inversement, à l'aide d'un moyen de manoeuvre (179).

8. Machine de coupe selon la revendication 7, caractérisée en ce que le moyen de manoeuvre (179) est un vérin (180) commandé à partir du véhicule moteur (2).

9. Machine de coupe selon la revendication 5 et l'une au moins des revendications 6 à 8, caractérisée en ce que la commande à distance (69) du dispositif de commande (60) est actionnée à l'aide de l'organe de dépose (55) de sorte que :
- lorsque l'organe de dépose (55) se trouve dans sa position de travail, le ressort de traction (59) peut délester le mécanisme de coupe (6),
et
- lorsque l'organe de dépose (55) se trouve dans sa position de dépose, l'action du ressort de traction (59) est annulée.

10. Machine de coupe selon la revendication 9, caractérisée en ce que la commande à distance (69) du dispositif de commande (60) comporte une gaine (71) à l'intérieur de laquelle peut être translaté un câble (72) lié d'une part directement ou indirectement à l'organe de dépose (55) et, d'autre part, au dispositif de commande (60).

11. Machine de coupe selon l'une au moins des revendications 1 à 10, caractérisée en ce que l'organe de verrouillage (28) comporte :
- un limiteur (29), de longueur variable, lié, à l'une de ses extrémités longitudinales, à la structure d'attelage (4) au moyen d'une articulation (33) et, à l'autre de ses extrémités longitudinales, à la poutre-support (5) au moyen d'une autre articulation (36), chacune desdites articulations (33, 36) présentant au moins un axe au moins sensiblement parallèle à l'axe du premier tourillon (11),
et
- un verrou (32) destiné à verrouiller ledit limiteur (29) durant le transport.

12. Machine de coupe selon la revendication 11, caractérisée en ce :
- que le limiteur (29) comporte un tube (30) articulé à la structure d'attelage (4) et une tringle (31) articulée, à l'une de ses extrémités longitudinales, à la poutre-support (5), tandis qu'à l'autre de ses extrémités, la tringle (31) comporte un trou oblong (34) s'étendant à l'intérieur dudit tube (30) et traversé par un axe (35) fixé audit tube (30),
et
- que le verrou (32) est articulé à la poutre-support (5) au moyen d'une liaison pivot (37) d'axe au moins sensiblement confondu avec l'axe de l'articulation (36) liant la tringle (31) du limiteur (29) à la poutre-support (5), de sorte que ledit verrou (32) puisse occuper deux positions par pivotement autour de l'axe de ladite liaison pivot (37) :
- une position de travail et de dépose dans laquelle le limiteur (29) limite le pivotement de la poutre-support (5) par rapport à la structure d'attelage (4) autour de l'axe (11A) du premier tourillon (11),
et
- une position de transport dans laquelle le limiteur (29) est verrouillé en position ouverte, c'est-à-dire lorsque sa longueur est la plus grande.

13. Machine de coupe selon la revendication 11 ou 12, caractérisée en ce qu'un ressort (38) amène et maintient le verrou (32) en position déverrouillée de travail et de dépose.

14. Machine de coupe selon l'une au moins des revendications 11 à 13, caractérisée en ce qu'une commande à distance (39) permet d'amener et de maintenir directement ou indirectement le verrou (32) en position verrouillée de transport.

15. Machine de coupe selon la revendication 14, caractérisée en ce que ladite commande à distance (39) est une cordelette (40) pouvant être manipulée à partir du véhicule moteur (2).

16. Machine de coupe selon l'une au moins des revendications 1 à 15, caractérisée en ce que le mécanisme de coupe (6) peut être amené dans une position relevée de transport, par pivotement autour de l'axe (12A) du deuxième tourillon (12), à l'aide d'un organe de manoeuvre (49).

17. Machine de coupe selon la revendication 16, caractérisée en ce que l'organe de manoeuvre (49) est un vérin (50) lié, à l'une de ses extrémités longitudinales, au mécanisme de coupe (6) au moyen d'un levier pivotant (52) et, à l'autre de ses extrémités longitudinales, à la structure d'attelage (4) à l'aide d'une articulation (51) présentant au moins un axe au moins sensiblement parallèle à l'axe (11A) du premier tourillon (11).

18. Machine de coupe selon la revendication 16 ou 17 et l'une au moins des revendications 11 à 15, caractérisée en ce que le mécanisme de coupe (6) comporte un organe de maintien (46) maintenant le verrou (32) dans sa position verrouillée lorsque ledit mécanisme de coupe (6) est en position relevée de transport.

19. Machine de coupe selon la revendication 18, caractérisée en ce qu'entre l'organe de maintien (46) et le verrou (32) s'étend un organe élastiquement déformable (47) destiné à débuter le mouvement de descente du mécanisme de coupe (6).

20. Machine de coupe selon la revendication 19, caractérisée en ce que l'organe élastiquement déformable (47) est une butée en caoutchouc (48) fixée au verrou (32).

21. Machine de coupe selon l'une au moins des revendications 1 à 20, caractérisée en ce qu'elle comporte, en sus, un moyen de verrouillage (41) destiné à verrouiller le mécanisme de coupe (6) dans sa position de transport.

22. Machine de coupe selon la revendication 21, caractérisée en ce qu'une commande à distance (39) permet de déverrouiller le mécanisme de coupe (6) en agissant sur le moyen de verrouillage (41).

23. Machine de coupe selon la revendication 21 ou 22, caractérisée en ce que le mécanisme de coupe (6) peut être amené en position relevée de transport et que le moyen de verrouillage (41) est un loquet lié à la poutre-support au moyen d'une liaison pivot (42) d'axe au moins sensiblement parallèle à l'axe (12A) du deuxième tourillon (12) et destiné à venir s'accrocher à un organe d'accrochage (45) du mécanisme de coupe (6), le déplacement et le maintien du loquet (41) dans sa position verrouillée étant réalisés à l'aide d'un ressort (44).

24. Machine de coupe selon l'une au moins des revendications 1 à 23, caractérisée en ce que, vu suivant la direction d'avance (10) au travail, l'axe (11A) du premier tourillon (11) s'étend au moins sensiblement au centre du triangle défini par les trois points d'attelage (7) de la structure d'attelage (4).

25. Machine de coupe selon l'une au moins des revendications 1 à 24, caractérisée en ce que la structure d'attelage (4) comporte un cadre (73) muni des trois points d'attelage (7) et un dispositif de liaison (74) liant ledit cadre (73) au premier tourillon (11), lequel dispositif de liaison (74) autorise, le cas échéant, un pivotement du premier tourillon (11) par rapport à ce cadre (73) autour d'un axe géométrique dirigé vers le haut.

26. Machine de coupe selon la revendication 25, caractérisée en ce que le dispositif de liaison (74) comporte un tourillon (75) lié à son extrémité inférieure au premier tourillon (11) et articulé au cadre (73) à l'aide d'une liaison pivot (76) d'axe géométrique au moins sensiblement vertical.

## Claims

1. Cutting machine (1, 101) including:
- a cutting mechanism (6) extending, when working, transversely to the direction of advance (10),
- a hitch structure (4) provided with three hitch points (7) which are intended to be linked to the three hitch points (8) of the lilting device (9) of a motor vehicle (2),
- a support beam (5) articulated, on the one hand, to the hitch structure (4) by means of a first pivot (11) with an axis (11A) oriented forwards and extending, seen along the direction of advance (10) when working, at least substantially in the vicinity of the triangle formed by the three hitch points (7) of the hitch structure (4) and, on the other hand, to the cutting mechanism (6) with the aid of a second pivot (12) with an axis (12A) oriented forwards,
- a set-down member (55) intended to hold the support beam (5) in a set-down position so that the hitch structure (4) can be pivoted about the axis (11A) of the said first pivot (11),
and
- a tension member (58) including a spring (59) intended, during the work, to lighten the cutting mechanism (6) and the action of which can be cancelled for the purpose of setting down,
***characterized in*** that:
- the tension member (58) includes in addition a control device (60) intended to relax the said spring (59) for the purpose of setting down and articulated to the hitch structure (4) with the aid of a pivot connection (63) of axis at least substantially parallel to the axis (11A) of the first pivot (11),
- the spring (59) is a tension spring articulated, at one of its ends, to the cutting mechanism (6) by means of a connection (61) having an axis at least substantially parallel to the axis (12A) of the second pivot (12) and, at the other of its ends, to a tie rod (62) connected to the control device (60) and of axis at least substantially coincident with the longitudinal axis of the tension spring (59),
and
- a locking member (28) is provided, independent of the tension member (58), in order to lock, during transport, the pivoting of the support beam (5) with respect to the hitch structure (4) about the axis (11A) of the first pivot (11) and the action of which is cancelled during working and setting down.

2. Cutting machine according to Claim 1*, **characterized in*** that the tie rod (62) is provided with a shoulder (65) intended to rest against a retractable stop (64) of the control device (60), the said retractable stop (64) being able to occupy two positions:
- a working position in which the shoulder (65) of the tie rod (62) rests against the said stop (64), enabling the tension spring (59) to lighten the cutting mechanism (6),
and
- a set-down position in which the said stop (64) is retracted, the cutting mechanism (6) then resting longitudinally on the ground.

3. Cutting machine according to Claim 2, ***characterized in*** that the stop (64) is held in its working position by means of a spring (68).

4. Cutting machine according to Claim 3, ***characterized in*** that the stop (64) and the spring (68) consist of a leaf spring (70) the free end of which is in the form of a fork.

5. Cutting machine according to one at least of Claims 1 to 4, ***characterized in*** that the control device (60) is actuated by means of a remote control (69).

6. Cutting machine according to one at least of Claims 1 to 5, ***characterized in*** that the set-down member (55) is connected to the first pivot (11) or to the support beam (5) in the vicinity of the said first pivot (11), and that it can occupy two positions:
- a working position, in which the set-down member (55) is retracted,
and
- a set-down position in which the set-down member (55) is intended to rest on the ground in order to support the support beam (5).

7. Cutting machine according to Claim 6, ***characterized in*** that the set-down member (55) can be brought from its working position into its set-down position, and conversely, with the aid of an operating means (179).

8. Cutting machine according to Claim 7, characterized in that the operating means (179) is a cylinder (180) controlled from the motor vehicle (2).

9. Cutting machine according to Claim 5 and one at least of Claims 6 to 8, ***characterized in*** that the remote control (69) of the control device (60) is actuated with the aid of the set-down member (55) so that:
- when the set-down member (55) is in its working position, the tension spring (59) can lighten the cutting mechanism (6)
and
- when the set-down member (55) is in its set-down position, the action of the tension spring (59) is cancelled.

10. Cutting machine according to Claim 9, ***characterized in*** that the remote control (69) of the control device (60) includes a sheath (71) inside of which can be translated a cable (72) connected, on the one hand, directly or indirectly to the set-down member (55) and, on the other hand, to the control device (60).

11. Cutting machine according to one at least of Claims 1 to 10, ***characterized in*** that the locking member (28) includes:
- a limiter (29), of variable length, connected at one of its longitudinal ends to the hitch structure (4) by means of an articulation (33) and at the other of its longitudinal ends to the support beam (5) by means of another articulation (36), each of the said articulations (33, 36) having at least one axis at least substantially parallel to the axis of the first pivot (11),
and
- a locking element (32) intended to lock the said limiter (29) during transport.

12. Cutting machine according to Claim 11, ***characterized in***:
- that the limiter (29) includes a tube (30) articulated to the hitch structure (4) and a link rod (31) articulated at one of its longitudinal ends to the support beam (5), while at the other of its ends the link rod (31) includes an oblong hole (34) which extends inside the said tube (30) and through which a pin (35) fixed to the said tube (30) passes,
and
- that the locking element (32) is articulated to the support beam (5) by means of a pivot connection (37) with an axis at least substantially coincident with the axis of the articulation (36) connecting the link rod (31) of the limiter (29) to the support beam (5), so that the said locking element (32) can occupy two positions by pivoting about the axis of the said pivot connection (37):
- a working and set-down position in which the limiter (29) limits the pivoting of the support beam (5) with respect to the hitch structure (4) about the axis (11A) of the first pivot (11)
and
- a transport position in which the limiter (29) is locked in the open position, that is to say when its length is greatest.

13. Cutting machine according to Claim 11 or 12, ***characterized in*** that a spring (38) brings the locking element (32) into the unlocked working and set-down position and holds it in this position.

14. Cutting machine according to one at least of Claims 11 to 13, ***characterized in*** that a remote control (39) enables the locking element (32) to be brought into and held in, directly or indirectly, the locked transport position.

15. Cutting machine according to Claim 14, ***characterized in*** that the said remote control (39) is a cord (40) which can be operated from the motor vehicle (2).

16. Cutting machine according to one at least of Claims 1 to 15, ***characterized in*** that the cutting mechanism (6) can be brought into a raised transport position, by pivoting about the axis (12A) of the second pivot (12), with the aid of an operating member (49).

17. Cutting machine according to Claim 16, ***characterized in*** that the operating member (49) is a cylinder (50) connected, at one of its longitudinal ends, to the cutting mechanism (6) by means of a pivoting lever (52) and, at the other of its longitudinal ends, to the hitch structure (4) with the aid of an articulation (51) having at least one axis at least substantially parallel to the axis (11A) of the first pivot (11).

18. Cutting machine according to Claim 16 or 17 and one at least of Claims 11 to 15, ***characterized in*** that the cutting mechanism (6) includes a holding member (46) holding the locking element (32) in its locked position when the said cutting mechanism (6) is in the raised transport position.

19. Cutting machine according to Claim 18, ***characterized in*** that an elastically deformable member (47), intended to initiate the movement of lowering the cutting mechanism (6), extends between the holding member (46) and the locking element (32).

20. Cutting machine according to Claim 19, ***characterized in*** that the elastically deformable member (47) is a rubber stop (48) fixed to the locking element (32).

21. Cutting machine according to one at least of Claims 1 to 20, ***characterized in*** that it includes, in addition, a locking means (41) intended to lock the cutting mechanism (6) in its transport position.

22. Cutting machine according to Claim 21, ***characterized in*** that a remote control (39) enables the cutting mechanism (6) to be unlocked by acting on the locking means (41).

23. Cutting machine according to Claim 21 or 22, ***characterized in*** that the cutting mechanism (6) can be brought into the raised transport position and that the locking means (41) is a catch connected to the support beam by means of a pivot connection (42) with an axis at least substantially parallel to the axis (12A) of the second pivot (12) and intended to catch on a catching member (45) of the cutting mechanism (6), the catch (41) being moved into and held in its locked position with the aid of a spring (44).

24. Cutting machine according to one at least of Claims 1 to 23, ***characterized in*** that, seen along the direction of advance (10) when working, the axis (11A) of the first pivot (11) extends at least substantially in the centre of the triangle defined by the three hitch points (7) of the hitch structure (4).

25. Cutting machine according to one at least of Claims 1 to 24, ***characterized in*** that the hitch structure (4) includes a frame (73) provided with three hitch points (7) and a connection device (74) connecting the said frame (73) to the first pivot (11), which connection device (74) allows, when required, pivoting of the first pivot (11) with respect to this frame (73) about an upwardly directed geometric axis.

26. Cutting machine according to Claim 25, ***characterized in*** that the connection device (74) includes a pivot (75) connected at its lower end to the first pivot (11) and articulated to the frame (73) with the aid of a pivot connection (76) with an at least substantially vertical geometric axis.

## Patentansprüche

1. Schneidmaschine (1, 101), die
- einen Schneidmechanismus (6), der sich während des Betriebs quer zur Fahrtrichtung (10) erstreckt,
- eine Kupplungsvorrichtung (4) mit drei Kupplungspunkten (7), die mit den drei Kupplungspunkten (8) der Hebevorrichtung (9) eines Motorfahrzeugs (2) verbunden werden sollen,
- einen Träger (5), der einerseits mittels eines ersten Zapfens (11) mit einer nach vorne gerichteten Achse (11A), die sich, in Fahrtrichtung (10) gesehen, bei Betrieb zumindest im wesentlichen nahe des von den drei Kupplungspunkten (7) der Kupplungsvorrichtung (4) gebildeten Dreiecks erstreckt, an der Kupplungsvorrichtung (4) und andererseits mittels eines zweiten Zapfens (12) mit einer nach vorne gerichteten Achse (12A) an dem Schneidmechanismus (6) angelenkt ist,
- ein Absetzglied (55), das den Träger (5) in einer Absetzstellung halten soll, so daß die Kupplungsvorrichtung (4) um die Achse (11A) des ersten Zapfens (11) geschwenkt werden kann,
und
- ein Zugglied (58) mit einer Feder (59), die während des Betriebs den Schneidmechanismus (6) entlasten soll und deren Wirkung im Hinblick auf das Absetzen außer Kraft gesetzt werden kann,
umfaßt,
***dadurch gekennzeichnet***, daß
- das Zugglied (58) darüber hinaus eine Steuervorrichtung (60) aufweist, die die Feder (59) im Hinblick auf das Absetzen ausdehnen soll und mittels einer Schwerkverbindung (63) mit einer zumindest im wesentlichen parallel zur Achse (11A) des ersten Zapfens (11) verlaufenden Achse an der Kupplungsvorrichtung (4) angelenkt ist,
- es sich bei der Feder (59) um eine Zugfeder handelt, die an einem ihrer Enden mittels einer Verbindung (61) mit einer zumindest im wesentlichen parallel zur Achse (12A) des zweiten Zapfens (12) verlaufenden Achse an dem Schneidmechanismus (6) und an ihrem anderen Ende an einem Zugstab (62), der mit der Steuervorrichtung (60) verbunden ist und eine mit der Längsachse der Zugfeder (59) zumindest im wesentlichen zusammenfallende Achse aufweist, angelenkt ist,
und
- ein von dem Zugglied (58) unabhängiges Verriegelungsglied (28) zum Verriegeln des Schwenkens des Trägers (5) bezuglich der Kupplungsvorrichtung (4) um die Achse (11A) des ersten Zapfens (11) beim Transport vorgesehen ist, wobei die Wirkung des Zugglieds beim Betrieb und beim Absetzen außer Kraft gesetzt wird.

2. Schneidmaschine nach Anspruch 1, ***dadurch gekennzeichnet***, daß der Zugstab (62) mit einer Schulter (65) versehen ist, die sich auf einen einklappbaren Anschlag (64) der Steuervorrichtung (60) stutzen soll, wobei der einklappbare Anschlag (64) zwei Stellungen einnehmen kann:
- eine Betriebsstellung, in der sich die Schulter (65) des Zugstabs (62) auf den Anschlag (64) stutzt, wodurch die Zugfeder (59) den Schneidmechanismus (6) entlasten kann,
und
- eine Absetzstellung, in der der Anschlag (64) eingeklappt ist, wobei der Schneidmechanismus (6) dann in Längsrichtung auf dem Boden ruht.

3. Schneidmaschine nach Anspruch 2, ***dadurch gekennzeichnet***, daß der Anschlag (64) mittels einer Feder (68) in seiner Betriebsstellung gehalten wird.

4. Schneidmaschine nach Anspruch 3, ***dadurch gekennzeichnet***, daß der Anschlag (64) und die Feder (68) aus einer Blattfeder (70) bestehen, deren freies Ende gabelförmig ausgebildet ist.

5. Schneidmaschine nach mindestens einem der Ansprüche 1 bis 4, ***dadurch gekennzeichnet***, daß die Steuervorrichtung (60) mittels einer Fernbedienung (69) betätigt wird.

6. Schneidmaschine nach mindestens einem der Ansprüche 1 bis 5, ***dadurch gekennzeichnet***, daß das Absetzglied (55) mit dem ersten Zapfen (11) oder nahe des ersten Zapfens (11) mit dem Träger (5) verbunden ist, und daß es zwei Stellungen einnehmen kann:
- eine Betriebsstellung, in der das Absetzglied (55) eingeklappt ist,
und
- eine Absetzstellung, in der das Absetzglied (55) auf dem Boden ruhen soll, um den Träger (5) zu stützen.

7. Schneidmaschine nach Anspruch 6, ***dadurch gekennzeichnet***, daß das Absetzglied (55) mittels eines Betätigungsmittels (179) aus seiner Betriebsstellung in seine Absetzstellung und umgekehrt gebracht werden kann.

8. Schneidmaschine nach Anspruch 7, ***dadurch gekennzeichnet***, daß es sich bei dem Betätigungsmittel (179) um einen von dem Motorfahrzeug (2) aus gesteuerten Zylinder (180) handelt.

9. Schneidmaschine nach Anspruch 5 und mindestens einem der Ansprüche 6 bis 8, ***dadurch gekennzeichnet***, daß die Fernbedienung (69) der Steuervorrichtung (60) mittels des Absetzglieds (55) so betätigt wird, daß
- die Zugfeder (59) den Schneidmechanismus (6) entlasten kann, wenn sich das Absetzglied (55) in seiner Betriebsstellung befindet,
und
- die Wirkung der Zugfeder (59) außer Kraft gesetzt wird, wenn sich das Absetzglied (55) in seiner Absetzstellung befindet.

10. Schneidmaschine nach Anspruch 9, ***dadurch gekennzeichnet***, daß die Fernbedienung (69) der Steuervorrichtung (60) eine Hülse (71) aufweist, in der ein Kabel (72) verschoben werden kann, das einerseits direkt oder indirekt mit dem Absetzglied (55) und andererseits mit der Steuervorrichtung (60) verbunden ist.

11. Schneidmaschine nach mindestens einem der Ansprüche 1 bis 10, ***dadurch gekennzeichnet***, daß das Verriegelungsglied (28)
- einen Begrenzer (29) mit veränderbarer Länge, der mittels eines Gelenks (33) an einem seiner Längsenden mit der Kupplungsvorrichtung (4) und mittels eines anderen Gelenks (36) an seinem anderen Längsende mit dem Träger (5) verbunden ist, wobei jedes der Gelenke (33, 36) mindestens eine zumindest im wesentlichen parallel zur Achse des ersten Zapfens (11) verlaufende Achse aufweist,
und
- einen Riegel (32), der den Begrenzer (29) während des Transports verriegeln soll,
aufweist.

12. Schneidmaschine nach Anspruch 11, ***dadurch gekennzeichnet***,
- daß der Begrenzer (29) ein an der Kupplungsvorrichtung (4) angelenktes Rohr (30) und eine an einem ihrer Längsenden an dem Träger (5) angelenkte Stange (31) aufweist, während die Stange (31) an ihrem anderen Ende ein Langloch (34) aufweist, das sich im Innern des Rohres (30) erstreckt und von einer an dem Rohr (30) befestigten Achse (35) durchquert ist,
und
- daß der Riegel (32) mittels einer Schwenkverbindung (37) mit einer mit der Gelenkachse (36), die die Stange (31) des Begrenzers (29) mit dem Träger (5) verbindet, zumindest im wesentlichen zusammenfallenden Achse derart an dem Träger (5) angelenkt ist, daß der Riegel (32) durch Schwenken um die Achse der Schwenkverbindung (37) zwei Stellungen einnehmen kann:
- eine Betriebs- und Absetzstellung, in der der Begrenzer (29) das Schwenken des Trägers (5) bezüglich der Kupplungsvorrichtung (4) um die Achse (11A) des ersten Zapfens (11) begrenzt,
und
- eine Transportstellung, in der der Begrenzer (29) in geöffneter Stellung verriegelt ist, d.h. wenn seine Länge am größten ist.

13. Schneidmaschine nach Anspruch 11 oder 12, ***dadurch gekennzeichnet***, daß eine Feder (38) den Riegel (32) in seine entriegelte Betriebs- und Absetzstellung bringt und dort hält.

14. Schneidmaschine nach mindestens einem der Ansprüche 11 bis 13, ***dadurch gekennzeichnet***, daß eine Fernbedienung (39) das direkte oder indirekte Bringen des Riegels (32) in eine verriegelte Transportstellung und dort Halten gestattet.

15. Schneidmaschine nach Anspruch 14, ***dadurch gekennzeichnet***, daß es sich bei der Fernbedienung (39) um eine Schnur (40) handelt, die vom Motorfahrzeug (2) aus gehandhabt werden kann.

16. Schneidmaschine nach mindestens einem der Ansprüche 1 bis 15, ***dadurch gekennzeichnet***, daß der Schneidmechanismus (6) mittels eines Betätigungsglieds (49) durch Schwenken um die Achse (12A) des zweiten Zapfens (12) in eine angehobene Transportstellung gebracht werden kann.

17. Schneidmaschine nach Anspruch 16, ***dadurch gekennzeichnet***, daß es sich bei dem Betätigungsglied (49) um einen Zylinder (50) handelt, der mittels eines Schwenkhebels (52) an einem seiner Längsenden mit dem Schneidmechanismus (6) und mittels eines Gelenks (51), das mindestens eine zumindest im wesentlichen parallel zur Achse (11A) des ersten Zapfens (11) verlaufende Achse aufweist, an seinem anderen Längsende mit der Kupplungsvorrichtung (4) verbunden ist.

18. Schneidmaschine nach Anspruch 16 oder 17 und mindestens einem der Ansprüche 11 bis 15, ***dadurch gekennzeichnet***, daß der Schneidmechanismus (6) ein Halteglied (46) enthält, das den Riegel (32) in seiner verriegelten Stellung hält, wenn sich der Schneidmechanismus (6) in der angehobenen Transportstellung befindet.

19. Schneidmaschine nach Anspruch 18, ***dadurch gekennzeichnet***, daß sich ein elastisch verformbares Glied (47), das die Abwärtsbewegung des Schneidmechanismus (6) beginnen soll, zwischen dem Halteglied (46) und dem Riegel (32) erstreckt.

20. Schneidmaschine nach Anspruch 19, ***dadurch gekennzeichnet***, daß es sich bei dem elastisch verformbaren Glied (47) um einen am Riegel (32) befestigten Anschlag (48) aus Gummi handelt.

21. Schneidmaschine nach mindestens einem der Ansprüche 1 bis 20, ***dadurch gekennzeichnet***, daß sie ferner ein Verriegelungsmittel (41) enthält, das den Schneidmechanismus (6) in seiner Transportstellung verriegeln soll.

22. Schneidmaschine nach Anspruch 21, ***dadurch gekennzeichnet***, daß eine Fernbedienung (39) das Entriegeln des Schneidmechanismus (6) gestattet, indem sie auf das Verriegelungsmittel (41) einwirkt.

23. Schneidmaschine nach Anspruch 21 oder 22, ***dadurch gekennzeichnet***, daß der Schneidmechanismus (6) in eine angehobene Transportstellung gebracht werden kann und daß es sich bei dem Verriegelungsmittel (41) um eine Klinke handelt, die mittels einer Schwenkverbindung (42) mit einer zumindest im wesentlichen parallel zur Achse (12A) des zweiten Zapfens (12) verlaufenden Achse mit dem Träger verbunden ist und an einem Arthängeglied (45) des Schneidmechanismus (6) angehängt werden soll, wobei das Bewegen der Klinke (41) in ihre verriegelte Stellung und dort Halten mittels einer Feder (44) bewirkt wird.

24. Schneidmaschine nach mindestens einem der Ansprüche 1 bis 23, ***dadurch gekennzeichnet***, daß sich die Achse (11A) des ersten Zapfens (11) beim Betrieb, in Fahrtrichtung (10) gesehen, zumindest im wesentlichen in der Mitte des von den drei Kupplungspunkten (7) der Kupplungsvorrichtung (4) definierten Dreiecks erstreckt.

25. Schneidmaschine nach mindestens einem der Ansprüche 1 bis 24, ***dadurch gekennzeichnet***, daß die Kupplungsvorrichtung (4) einen Rahmen (73) enthält, der mit drei Kupplungspunkten (7) und einer Verbindungsvorrichtung (74) ausgestattet ist, die den Rahmen (73) mit dem ersten Zapfen (11) verbindet, wobei die Verbindungsvorrichtung (74), falls erforderlich, ein Schwenken des ersten Zapfens (11) bezuglich dieses Rahmens (73) um eine nach oben gerichtete geometrische Achse gestattet.

26. Schneidmaschine nach Anspruch 25, ***dadurch gekennzeichnet***, daß die Verbindungsvorrichtung (74) einen Zapfen (75) enthält, der an seinem unteren Ende mit dem ersten Zapfen (11) verbunden ist und mittels einer Schwenkverbindung (76) mit einer zumindest im wesentlichen vertikalen geometrischen Achse an dem Rahmen (73) angelenkt ist.
